# FASCICULE DE BREVET EUROPEEN

(11) **EP 3 433 133 B1**
(45) Date de publication et mention de la délivrance du brevet: **07.09.2022**
(21) Numéro de dépôt: 17709132.9
(22) Date de dépôt: 09.02.2017
(51) Int. Cl.: B60R 13/08

(54) **INSONORISATION DE TUNNEL AVANT DE VEHICULE AUTOMOBILE**
SCHALLISOLIERUNG EINES KRAFTFAHRZEUGFRONTTUNNELS
MOTOR VEHICLE FRONT TUNNEL SOUNDPROOFING

(30) Priorité: 24.03.2016 FR 1652531
(43) Date de publication de la demande: 30.01.2019
(73) Titulaire: PSA Automobiles SA, 78300 Poissy (FR)
(72) Inventeur: TAVERNIER, Luc, 25470 TREVILLERS (FR); WOLF, Guillaume, 69140 Rillieux la Pape (FR); BOITEUX, Bertrand, 25700 MATHAY (FR); GRABER, Michel, 70400 CHALONVILLARS (FR); REGNAULT, David, 91310 LEUVILLE-SUR-ORGE (FR)
(74) Mandataire: Fernandez, Francis Lionel
(86) Numéro de dépôt international: PCT/FR2017/050294
(87) Numéro de publication internationale: WO 2017/162935

(56) Documents cités:
- EP-A1- 1 298 004
- WO-A1-2008/096050
- FR-A1- 2 842 776
- FR-A1- 2 923 447

## Description

L'invention concerne l'insonorisation d'un véhicule. Plus précisément, l'invention se rapporte au positionnement d'un panneau acoustique d'un véhicule automobile. L'invention a également trait à un véhicule.

Afin d'améliorer le confort acoustique d'un véhicule, des panneaux d'isolation phonique habillent les surfaces de la caisse. Ces panneaux tapissent des tôles soumises aux vibrations du moteur et de roulement, ce qui permet de filtrer les émissions sonores auxquelles sont exposés les passagers pendant la circulation du véhicule.

Les panneaux employés pour cette application sont bien connus de l'homme du métier. Un tel panneau comprend généralement une couche mole, ou couche ressort, qui se déforme sous l'effet des vibrations. En complément, le panneau inclue une couche de masse supportée par la couche ressort. Cette couche de masse présente une masse élevée et forme une plaque d'inertie grâce à sa densité. Lorsque le panneau est soumis à des vibrations, la souplesse de la couche ressort et l'inertie de la couche de masse tendent à limiter les oscillations de cette dernière ; d'où un gommage des bruits.

Le document EP 1 298 004 A1 divulgue un panneau insonorisant, comprenant :
- une surface de contact destinée à recouvrir la structure du véhicule ;
- une couche de masse ; et
- une couche ressort destinée à amortir les vibrations transmises de la surface de contact à la couche de masse ;
comprenant en outre des moyens de positionnement qui sont formés par au moins une des couches du panneau et qui font saillie depuis la surface de contact.

Le document FR 2 923 447 A1 divulgue une structure de véhicule comportant des moyens de mise en position d'un panneau insonorisant. Ce dernier comporte une couche de mousse et une plaque massive. Le panneau insonorisant est fixé à la structure du véhicule sur une traverse qui marque la frontière du compartiment moteur. La traverse montre une série de languettes traversant le panneau afin de le maintenir. En complément, des agrafes assurent la fixation définitive du panneau insonorisant sur la structure. Cette solution permet donc un maintien ferme du panneau insonorisant.

Or, les languettes doivent être pliées pour assurer leur fonction de maintien. Cette géométrie impose donc une opération de pliage onéreuse. Aussi, l'emploi de languettes requiert de réaliser des fentes traversant le panneau insonorisant. Ceci nuit à son efficacité acoustique en plus de la fragiliser. Le coût de découpe additionnelle des fentes pénalise le véhicule.

Par ailleurs le maintien du panneau ne devient suffisant qu'après la fixation des agrafes, ce qui n'est effectué qu'à un stade avancé de l'assemblage. Or, le passage de faisceaux électriques au travers du panneau et de la structure du véhicule s'effectue lors d'une étape intermédiaire ; étape pendant laquelle le bon positionnement du panneau insonorisant n'est pas garanti. En raison des vibrations de la ligne d'assemblage du véhicule, le panneau doit être repositionné manuellement avant de passer les faisceaux dans l'orifice dédié du panneau. Cette opération est économiquement inacceptable dans le cadre d'une production en grande série.

L'invention a pour objectif de résoudre au moins un des problèmes posés par l'art antérieur. Plus précisément, l'invention a pour objectif de réduire le coût d'un véhicule comprenant un panneau d'isolation acoustique.

L'invention a pour objet un panneau d'isolation acoustique pour structure de véhicule, notamment un panneau d'isolation acoustique pour tunnel de véhicule, le panneau comprenant : une surface de contact destinée à recouvrir la structure du véhicule ; une couche de masse ; et une couche ressort destinée à amortir les vibrations transmises de la surface de contact à la couche de masse ; comprenant en outre des moyens de positionnement qui sont formés par au moins une des couches du panneau et qui font saillie depuis la surface de contact, remarquable en ce que les moyens de positionnement sont formés par la couche de masse et par la couche ressort.

Selon des modes particuliers de réalisation, le panneau d'isolation acoustique peut comprendre une ou plusieurs des caractéristiques suivantes, prises isolément ou selon toutes les combinaisons techniques possibles :
- Les moyens de positionnement sont un plot faisant saillie par rapport à la surface de contact.
- La ou chaque couche formant les moyens de positionnement présente une continuité de matière au niveau desdits moyens de positionnement.
- La surface de contact est généralement plane, le panneau comprenant également un orifice traversant situé dans ladite surface plane.
- La hauteur H des moyens de positionnement est supérieure ou égale à 10 mm.
- La couche ressort comprend de la mousse et/ou du feutre, et/ou un matériau poreux.
- La couche de masse est une plaque en polymère dense, et comprend éventuellement du polyéthylène.
- Le panneau comporte deux surfaces principales opposées selon son épaisseur, l'une d'elle étant la surface de contact.
- Les moyens de positionnement comprennent une surface externe généralement cylindrique et/ou sensiblement conique.
- La couche ressort comprend un matériau de moindre densité que le matériau formant la couche de masse ; éventuellement la densité et/ou la masse de la couche de masse est au moins deux fois, ou quatre fois, ou dix fois supérieure à celle de la couche ressort.
- Les moyens de positionnement sont creux.
- Les couches forment un corps d'épaisseur variable, la couche ressort étant éventuellement d'épaisseur variable, et éventuellement amincie au niveau des moyens de positionnement.
- La hauteur des moyens de positionnement est supérieure ou égale à 5mm, ou à 10mm, ou à 20mm.
- La couche de masse et la couche ressort sont de formes complémentaires, et/ou s'étendent chacune sur la majorité de la surface de contact.
- Le diamètre ou la largeur L des moyens de positionnement est compris entre 5mm et 50mm, ou entre 10mm et 20mm.
- Les moyens de positionnement sont à distance des bords du panneau.
- Les moyens de positionnement forment une butée et/ou une surépaisseur sur le panneau et/ou un sommet d'un tronçon du panneau. Le tronçon est considéré selon la longueur du panneau.
- Les moyens de positionnement comprennent une surface généralement perpendiculaire à la surface de contact.
- Lesdites couches forment un empilement continu sur toute la surface des moyens de positionnement.

Les caractéristiques liées à la surface de contact ne sont pas un aspect indispensable de l'invention. L'invention a également pour objet un ensemble d'insonorisation de véhicule, l'ensemble d'insonorisation comprenant : une paroi, notamment une tôle, et ; un panneau d'isolation acoustique avec une couche de masse et une couche ressort ; remarquable en ce que le panneau comprend en outre des moyens de positionnement qui sont formés par au moins une des couches, qui traversent la paroi et/ou qui coopèrent avec des moyens de positionnement correspondant de la paroi.

L'invention a également pour objet un véhicule, éventuellement automobile, comprenant un panneau d'isolation acoustique, remarquable en ce que le panneau d'isolation acoustique est conforme à l'invention ; le véhicule comprenant en outre une paroi avec un ajour dans lequel les moyens de positionnement sont insérés afin de positionner le panneau par rapport à la paroi.

Selon des modes particuliers de réalisation, le véhicule peut comprendre une ou plusieurs des caractéristiques suivantes, prises isolément ou selon toutes les combinaisons techniques possibles :
- Les moyens de positionnement comprennent une poche traversant l'ajour de la paroi.
- Le véhicule comprend au moins un tapis latéral avec un bord en contact du panneau d'isolation acoustique.
- Le véhicule comprend un support de boîtier en appui contre le panneau, notamment contre la couche de masse.
- Le véhicule comprend un tunnel, le panneau recouvrant la sensiblement tout le tiers avant ou la toute moitié avant dudit tunnel.
- Le véhicule comprend au moins un câble traversant la paroi et le panneau d'isolation acoustique, le câble traversant éventuellement le panneau au niveau de l'orifice.

De manière générale, les modes particuliers de chaque objet de l'invention sont également applicables aux autres objets de l'invention. Dans la mesure du possible, chaque objet de l'invention est combinable aux autres objets.

L'invention offre un panneau permettant de limiter le coût de positionnement tout en conservant une précision optimale. Les moyens de positionnement coopèrent directement avec la paroi les recevant, si bien que le panneau d'isolation acoustique reste en position dès qu'il est mis en place. Ce résultat est atteint sans autre artifice, et donc rapidement. L'invention devient particulièrement économique grâce à son mode de réalisation puisqu'elle exploite la présence de chaque couche dont elle exploite les qualités intrinsèques, et ce au service du positionnement.

Les moyens de positionnement offrent une efficacité optimale selon la direction longitudinale. Leur action peut être complémentaire des tapis latéraux pour le positionnement transversal du panneau.

L'invention est robuste. Elle permet de résister à l'influence de certains équipements, dont le boîtier de protection qui peut appuyer sur le panneau. Le panneau peut résister à la contrainte du boîtier de protection malgré les vibrations inhérentes à une ligne de production de véhicules automobiles.

D'autres caractéristiques et avantages de la présente invention seront mieux compris à l'aide de la description donnée à titre d'exemple et en référence aux dessins parmi lesquels :
la figure 1 présente une portion de véhicule automobile avec un panneau d'isolation acoustique selon l'invention ;
la figure 2 illustre une coupe longitudinale du panneau d'isolation acoustique de la figure 1 ;
la figure 3 montre la face de montage du panneau d'isolation acoustique de la figure 1 ; et
la figure 4 est une coupe du tunnel et du panneau d'isolation acoustique de la figure 1 au niveau des moyens de positionnement.

Dans la description qui va suivre, la direction longitudinale correspond à la direction principale de déplacement du véhicule, et l'avant renvoie au sens principal de déplacement. La direction transversale est considérée comme perpendiculaire à la direction longitudinale.

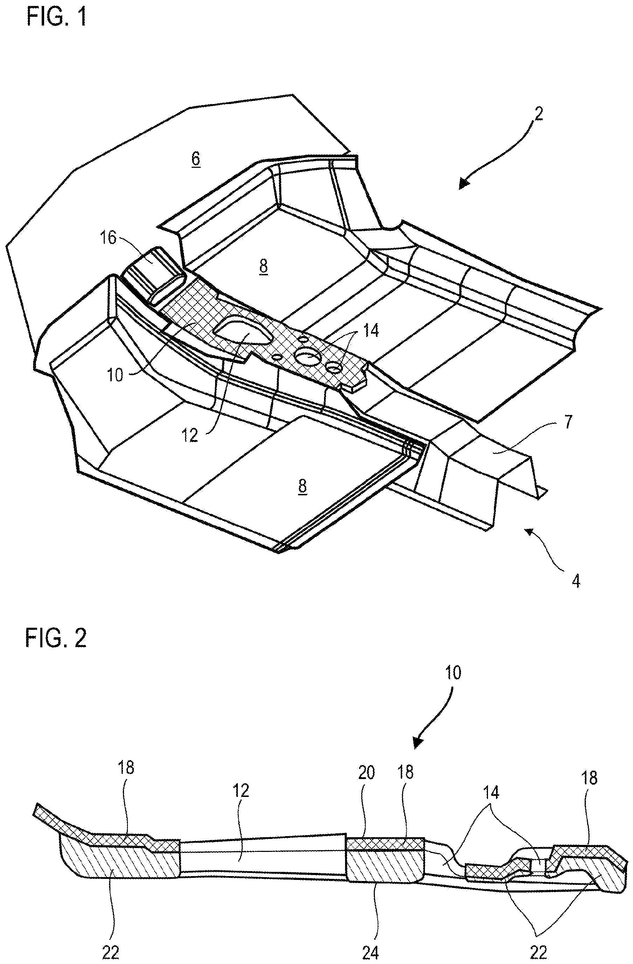

La figure 1 représente une portion 2 de véhicule automobile. La portion 2 comporte une partie avant de l'habitacle du véhicule, c'est-à-dire la partie d'habitacle recevant les sièges avant (non représentés) d'un véhicule automobile. Ces sièges sont couramment supportés par le plancher de la structure du véhicule. Un tunnel 4 emprunté par une conduite d'échappement (non représenté) sépare généralement lesdits sièges.

A l'avant, le tunnel 4 peut démarrer depuis une cloison de séparation 6 du compartiment moteur. Le tunnel 4 présente généralement une forme profilée en « U » inversé. Il peut être réalisé à l'aide de tôle. Il peut présenter une paroi supérieure 7 et deux parois latérales s'étendant vers le bas depuis la paroi supérieure 7. À la fois pour le confort acoustique et pour la qualité perçue, le plancher est recouvert de tapis latéraux 8. Ces tapis peuvent être séparés par le tunnel 4.

Afin de limiter les nuisances sonores issues du tunnel 4, ce dernier est recouvert par un panneau d'isolation acoustique 10. Le panneau améliore le confort malgré le bruit se propageant depuis le tuyau du pot d'échappement. Le panneau d'isolation acoustique 10 forme généralement une plaque, par exemple rectangulaire. Il peut être généralement plan. Il peut être bordé de part et d'autre par les tapis latéraux 8, dont les bords longitudinaux peuvent toucher le panneau 10. Cela permet un positionnement transversal du panneau 10 par les tapis latéraux 8. Le panneau 10 peut être ajouré. Il peut présenter une ouverture 12, par exemple une ouverture principale destinée à être traversée par un levier de passage de vitesse (non représenté). Il peut également présenter une série d'orifices 14 traversant pour le passage de faisceaux électriques (non représentés). Ces derniers peuvent être maintenus à l'aide de dispositifs d'encliquetage en prise avec le panneau 10 et la paroi supérieure du tunnel 4, ce qui permet en outre une fixation verticale du panneau 10. Optionnellement, une console centrale (non représentée) peut recouvrir le panneau 10. Celle-ci permet un maintien vertical du panneau 10.

En complément, le véhicule peut être équipé d'un support 16, par exemple un support de boîtier de commande de climatisation. Ce support 16 est Iié à la cloison de séparation 6 et peut reposer contre le panneau 10. Le support 16 peut être essentiellement souple, tant bien que pendant l'assemblage du véhicule il pousse contre le panneau 10, et le déplace. Les orifices 14 tendent alors à se désaxer des orifices correspondants de la paroi supérieure 7.

La figure 2 représente une coupe longitudinale du panneau d'isolation acoustique 10. Le panneau 10 peut être venu de matière, et/ou monobloc. Il peut former un panneau généralement plan.

Le panneau d'isolation acoustique 10 présente généralement une forme allongée. Le panneau 10 inclue un empilement de couches (18 ; 22), à la manière d'une structure en sandwich. Au-dessus, il présente une couche de masse 18, également appelée couche de masse lourde. Elle représente la majorité ou au moins 80% de la masse du panneau 10. Elle forme une plaque rigide, ou une coquille qui forme la face supérieure 20 du panneau 10. Elle peut être d'épaisseur sensiblement constante. Cette première couche peut être réalisée en un polymère dense et plein. Un polyéthylène, par exemple du PE EVAC peut être employé.

En dessous, le panneau d'isolation acoustique 10 comprend une couche ressort 22, qui est destinée à épouser le tunnel. Cette deuxième couche est essentiellement souple. Elle peut être en mousse, ou en feutre. Elle est poreuse. Sa face inférieure, ou face de montage 24, est destinée à être appliquée contre tunnel en l'épousant.

La couche ressort 22 peut être plus épaisse que la couche de masse 18, et peut représenter la majorité ou au moins 70% de l'épaisseur du panneau 10. Elle peut être d'épaisseur variable. La couche ressort 22 est davantage élastique que la couche de masse 18. La couche de masse 18 est plus dense et plus lourde que la couche ressort 22, par exemple au moins cinq ou dix fois.

Dans l'état monté, la couche de masse 18 est reliée à la structure du véhicule via la couche ressort 22. La couche ressort 22 est destinée à se déformer en compression lorsque le panneau 10 est soumis aux vibrations du tunnel, si bien qu'un amorti des vibrations transmises à la couche de masse 18 est permis. L'ouverture 12 et plusieurs orifices 14 sont représentés, ils traversent l'empilement des couches (18; 22). Suite à l'assemblage du véhicule, ils peuvent devenir obturés.

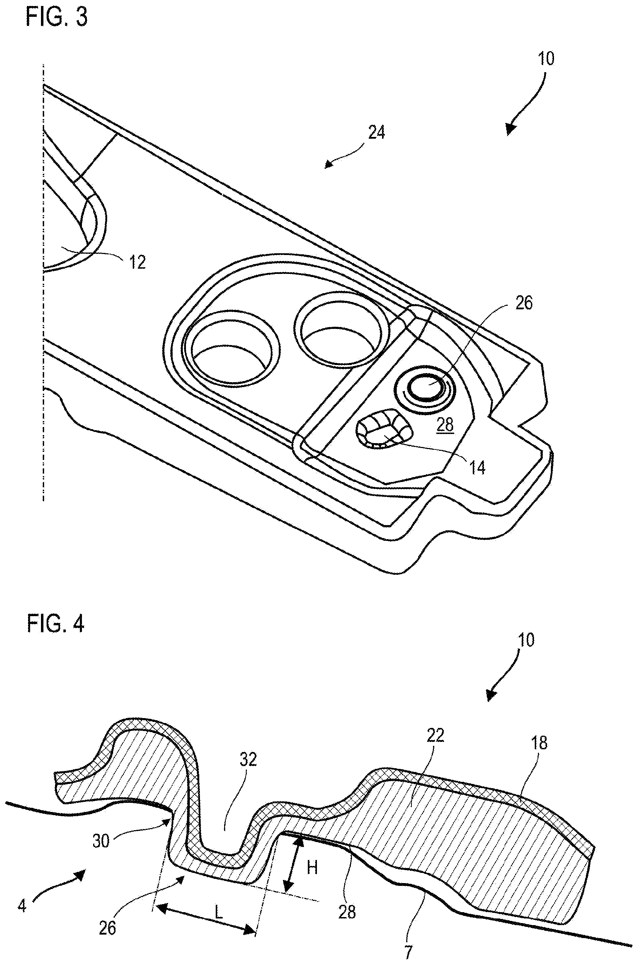

La figure 3 est une illustration du dessous du panneau d'isolation acoustique 10 afin d'exposer la face de montage 24. L'extrémité de l'ouverture 12 est représentée.

La face de montage 24 présente des moyens de positionnement 26 en saillie. Ils forment localement une bosse en élévation par rapport à une surface de contact 28 dans laquelle ils sont inscrits. Cette surface de contact 28 peut être généralement plane afin d'épouser une forme complémentaire du tunnel. En complément, cette surface de contact plane 28 peut recevoir un des orifices traversant 14. En raison de la proximité entre les moyens de positionnement 26 et l'orifice traversant 14, la précision de positionnement de ce dernier est garantie. Dès lors, l'introduction du faisceau électrique qu'il doit recevoir est simplifiée.

Les moyens de positionnement 26 peuvent être généralement ronds. Ils peuvent être cylindriques ou en base de cône. Ils peuvent être un plot formant une colonne qui s'étend perpendiculairement depuis la surface de contact 28. Selon cette vue, ils forment le point le plus haut, ou sommet, du tronçon arrière du panneau 10. Dans le sens normal de montage, les moyens de positionnement forment le point le plus bas dudit tronçon.

La figure 4 représente une coupe des moyens de positionnement 26 engagés dans un ajour 30 formé dans la paroi supérieure 7 du tunnel 4. Ceci forme un ensemble d'insonorisation du véhicule. L'ajour 30 forme alors des moyens de positionnement correspondants ; qui sont dédiés à ceux du panneau 10 pour garantir le positionnement.

La paroi supérieure 7 peut coucher la couche ressort 22, notamment au niveau de la surface d'assemblage 28 . Les moyens de positionnement 26 peuvent être formés à l'aide d'au moins une des couches (18 ; 22), par exemple la couche de masse 18 dont la raideur améliore la rigidité du positionnement du panneau d'isolation acoustique 10. Les moyens de positionnement 26 peuvent optionnellement être formés à l'aide des deux couches. La couche ressort 22 peut apporter un amorti contre le bord de l'ajour 30, de manière à éviter la transmission de vibrations de la paroi supérieure à la couche de masse 18. Chacune de ces couches peut être continue au niveau des moyens de positionnement 26 et de l'ajour afin de le recouvrir et de le boucher.

La hauteur H des moyens de positionnement 26 peut être de l'ordre de 10mm, tout comme sa largeur L. Ceci optimise l'ancrage des moyens de positionnement 26 dans l'ajour 30, et donc le bon maintien en position du panneau d'isolation acoustique 10 par rapport à sa position de référence. Le contour de l'ajour 30 peut être ajusté au contour des moyens de positionnement 26. Optionnellement, l'ajour est adapté pour serrer les moyens de positionnement.

Optionnellement, le panneau d'isolation acoustique 10 présente une poche 32 à l'intérieur des moyens de positionnement 26. Cet évidement réduit la masse de l'ensemble. Cet évidement peut être formé par chacune des couches (18 ; 22). Il peut traverser l'ajour 30, ce qui témoigne à la fois de l'évidement et de l'engagement de matière des moyens de positionnement 26 dans l'ajour 30.

L'invention qui vient d'être décrite est particulièrement avantageuse pour un panneau isolant un tunnel de plancher de véhicule. Toutefois, elle peut être adaptée à une paroi de séparation d'habitacle, au coffre, ou à un logement de roue de secours.

## Revendications

1. Panneau d'isolation acoustique (10) pour structure de véhicule, notamment un panneau d'isolation acoustique (10) pour tunnel (4) de véhicule, le panneau (10) comprenant :
- une surface de contact (28) destinée à recouvrir la structure du véhicule ;
- une couche de masse (18) ; et
- une couche ressort (22) destinée à amortir les vibrations transmises de la surface de contact (28) à la couche de masse ;
comprenant en outre des moyens de positionnement (26) qui sont formés par au moins une des couches (18 ; 22) du panneau (10) et qui font saillie depuis la surface de contact (28), **caractérisé en ce que** les moyens de positionnement (26) sont formés par la couche de masse (18) et par la couche ressort (22).

2. Panneau d'isolation acoustique (10) selon la revendication 1, **caractérisé en ce que** les moyens de positionnement (26) sont un plot faisant saillie par rapport à la surface de contact (28).

3. Panneau d'isolation acoustique (10) selon l'une des revendications 1 à 2, **caractérisé en ce que** la ou chaque couche (18 ; 22) formant les moyens de positionnement (26) présente une continuité de matière au niveau desdits moyens de positionnement (26).

4. Panneau d'isolation acoustique (10) selon l'une des revendications 1 à 3, **caractérisé en ce que** la surface de contact (28) est généralement plane, le panneau (10) comprenant également un orifice (14) traversant situé dans ladite surface plane (28).

5. Panneau d'isolation acoustique (10) selon l'une des revendications 1 à 4, **caractérisé en ce que** la hauteur H des moyens de positionnement (26) est supérieure ou égale à 10 mm.

6. Véhicule, éventuellement automobile, comprenant un panneau d'isolation acoustique (10), **caractérisé en ce que** le panneau d'isolation acoustique (10) est conforme à l'une des revendications 1 à 5; le véhicule comprenant en outre une paroi (7) avec un ajour (30) dans lequel les moyens de positionnement (26) sont insérés afin de positionner le panneau (10) par rapport à la paroi (7).

7. Véhicule selon la revendication 6, **caractérisé en ce que** les moyens de positionnement (26) comprennent une poche (32) traversant l'ajour (30) de la paroi (7).

8. Véhicule selon l'une des revendications 6 à 7, **caractérisé en ce qu'**il comprend au moins un tapis latéral (8) avec un bord en contact du panneau d'isolation acoustique (10).

9. Véhicule selon l'une des revendications 6 à 8, **caractérisé en ce qu'**il comprend un support de boîtier (16) en appui contre le panneau (10), notamment contre la couche de masse (18).

## Patentansprüche

1. Schalldämmplatte (10) für Fahrzeugstruktur, insbesondere Schalldämmplatte (10) für Fahrzeugtunnel (4), wobei die Platte (10) umfasst:
- eine Kontaktfläche (28) zur Abdeckung der Fahrzeugstruktur;
- eine Masseschicht (18); und
- eine Federschicht (22) zur Dämpfung der von der Kontaktfläche (28) auf die Masseschicht übertragenen Schwingungen;
ferner mit einer Positioniereinrichtung (26), die durch mindestens eine der Schichten (18; 22) der Platte (10), die von der Kontaktfläche (28) vorstehen, **dadurch gekennzeichnet, dass** die Positioniermittel (26) durch die Masseschicht (18) und die Federschicht (22) gebildet sind.

2. Schalldämmplatte (10) nach Anspruch 1, **dadurch gekennzeichnet, dass** die Positioniermittel (26) ein Stift sind, der von der Kontaktfläche (28) vorsteht.

3. Schalldämmplatte (10) nach einem der Ansprüche 1 bis 2, **dadurch gekennzeichnet, dass** die oder jede Schicht (18; 22), die die Positioniermittel (26) bilden, eine Materialkontinuität an den Positioniermitteln (26) aufweist.

4. Schalldämmplatte (10) nach einem der Ansprüche 1 bis 3, **dadurch gekennzeichnet, dass** die Kontaktfläche (28) im Allgemeinen eben ist, wobei die Platte (10) auch eine durchgehende Öffnung (14) aufweist, die in der ebenen Fläche (28) angeordnet ist.

5. Schalldämmplatte (10) nach einem der Ansprüche 1 bis 4, **dadurch gekennzeichnet, dass** die Höhe H der Positioniermittel (26) größer oder gleich 10 mm ist.

6. Fahrzeug, gegebenenfalls Kraftfahrzeug, mit einer Schalldämmplatte (10), **dadurch gekennzeichnet, dass** die Schalldämmplatte (10) einem der Ansprüche 1 bis 5 entspricht; Fahrzeug, das ferner eine Wand (7) mit einem Durchbruch (30) aufweist, in die die Positioniereinrichtung (26) eingesetzt ist, um die Platte (10) relativ zu der Wand (7) zu positionieren.

7. Fahrzeug nach Anspruch 6, **dadurch gekennzeichnet, dass** die Positionierungsmittel (26) eine Tasche (32) umfassen, die durch den Durchbruch (30) der Wand (7) hindurchgeht.

8. Fahrzeug nach einem der Ansprüche 6 bis 7, **dadurch gekennzeichnet, dass** es mindestens eine Seitenmatte (8) mit einer in Kontakt stehenden Kante der Schalldämmplatte (10) umfasst.

9. Fahrzeug nach einem der Ansprüche 6 bis 8, **dadurch gekennzeichnet, dass** es einen Gehäuseträger (16) umfasst, der an der Platte (10), insbesondere an der Masseschicht (18), anliegt.

## Claims

1. Sound insulating panel (10) for vehicle structure, in particular a sound insulating panel (10) for vehicle tunnel (4), the panel (10) comprising:
- a contact surface (28) for covering the vehicle structure;
- a ground layer (18); and
- a spring layer (22) for damping vibrations transmitted from the contact surface (28) to the ground layer;
further comprising positioning means (26) formed by at least one of the layers (18; 22) of the panel (10) and which project from the contact surface (28), **characterized in that** the positioning means (26) are formed by the ground layer (18) and by the spring layer (22).

2. A sound insulating panel (10) according to claim 1, **characterized in that** the positioning means (26) is a stud projecting from the contact surface (28).

3. Sound insulation panel (10) according to one of Claims 1 to 2, **characterized in that** the or each layer (18; 22) forming the positioning means (26) has a continuity of material at said positioning means (26).

4. A sound insulation panel (10) according to one of claims 1 to 3, **characterized in that** the contact surface (28) is generally planar, the panel (10) also comprising a through hole (14) located in said planar surface (28).

5. Sound insulation panel (10) according to one of Claims 1 to 4, **characterized in that** the height H of the positioning means (26) is greater than or equal to 10 mm.

6. A vehicle, optionally a motor vehicle, comprising a sound-insulating panel (10), **characterized in that** the sound-insulating panel (10) is in accordance with one of claims 1 to 5; the vehicle further comprises a wall (7) with an aperture (30) into which the positioning means (26) are inserted to position the panel (10) relative to the wall (7).

7. Vehicle according to claim 6, **characterized in that** the positioning means (26) comprise a pocket (32) passing through the aperture (30) of the wall (7).

8. Vehicle according to one of Claims 6 to 7, **characterized in that** it comprises at least one side mat (8) with an edge in contact with the acoustic insulation panel (10).

9. Vehicle according to one of Claims 6 to 8, **characterized in that** it comprises a housing support (16) bearing against the panel (10), in particular against the ground layer (18).
